# EUROPEAN PATENT APPLICATION

(11) **EP 4 183 480 A1**
(43) Date of publication of application: **24.05.2023**
(21) Application number: 20945612.8
(22) Date of filing: 22.10.2020
(51) Int. Cl.: B01J 8/04, C10G 45/02

(54) **MICRO-INTERFACE REACTION SYSTEM AND METHOD FOR DIESEL HYDROGENATION**

(30) Priority: 16.07.2020 CN 202010683562
(71) Applicant: Nanjing Yanchang Reaction Technology Research Institute Co., Ltd, Nanjing, Jiangsu 210047 (CN)
(72) Inventor: ZHANG, Zhibing, Nanjing, Jiangsu 210047 (CN); ZHOU, Zheng, Nanjing, Jiangsu 210047 (CN); ZHANG, Feng, Nanjing, Jiangsu 210047 (CN); LI, Lei, Nanjing, Jiangsu 210047 (CN); MENG, Weimin, Nanjing, Jiangsu 210047 (CN); WANG, Baorong, Nanjing, Jiangsu 210047 (CN); YANG, Gaodong, Nanjing, Jiangsu 210047 (CN); LUO, Huaxun, Nanjing, Jiangsu 210047 (CN); YANG, Guoqiang, Nanjing, Jiangsu 210047 (CN); TIAN, Hongzhou, Nanjing, Jiangsu 210047 (CN); CAO, Yu, Nanjing, Jiangsu 210047 (CN)
(74) Representative: Zaboliene, Reda
(86) International application number: PCT/CN2020/122723
(87) International publication number: WO 2022/011867

(57) **Abstract**

The invention discloses a micro-interface reaction system and method for diesel hydrogenation, which includes: a hydrogenation reactor, a plurality of sections of fixed beds are disposed in sequence from top to bottom in the hydrogenation reactor, and the plurality of fixed beds is filled with a catalyst; a micro-interface generator is disposed between the adjacent fixed beds, and a hydrogen inlet is disposed on the micro-interface generator. A side wall of the hydrogenation reactor is provided with a product outlet, and the product outlet is connected to a hydro-refining reactor for performing a deep hydrogenation reaction. A reaction product from a bottom of the hydro-refining reactor is passed into a gas-liquid separation tank for separating a gas phase containing hydrogen sulfide and hydrogen from the product, thereby obtaining the final product desulfurized diesel. By combining the micro-interface reaction system with the micro-interface generator, energy consumption is reduced for increasing productivity.

## Description

### FIELD OF THE INVENTION

The present invention relates to the technical field of diesel hydrogenation, in particular to a micro-interface reaction system and method for diesel hydrogenation.

### BACKGROUND OF THE INVENTION

With the improvement of people's awareness of environmental protection and the increasingly strict environmental regulations, the production and use of clean vehicle fuels has become a development trend, and the development of diesel deep hydro-desulfurization technology has become a current research focus. At present, the operation process of most diesel hydro-refining devices is that raw oil is hydrogenated by exchanging heat with refined diesel and the reaction product, and then being heated to the required reaction temperature in a heating furnace. Although this hydrogenation process is convenient to operate and easy to industrialize, however, the energy consumption is high, the pressure and temperature of the hydrogenation reactor are high, and the production capacity is relatively low.

In view of this, the present invention is proposed.

### SUMMARY OF THE INVENTION

A first objective of the present invention is to provide a micro-interface reaction system for diesel hydrogenation. By combining the hydrogenation reactor and the micro-interface generator, the micro-interface reaction system reduces energy consumption, reduces reaction temperature, improves reaction yield, and improves the utilization rate of raw materials, especially the utilization rate of hydrogen. At the same time, the production capacity is effectively increased, thereby improving the quality and the yield of the product. In addition, it also plays a rale in saving equipment costs and saving equipment floor space.

A second objective of the present invention is to provide a method for diesel hydro-desulfurization using the above-mentioned micro-interface reaction system. The desulfurized diesel obtained by the reaction is environmentally friendly and clean, has sufficient power as a fuel, is widely used, and improves the applicability of desulfurized diesel.

In order to realize the above-mentioned objectives of the present invention, the following technical schemes are specially adopted.

The present invention provides a micro-interface reaction system for diesel hydrogenation. The micro-interface reaction system includes a hydrogenation reactor, being successively provided with a plurality of sections of fixed beds from top to bottom, and the plurality of sections of fixed beds are filled with catalysts; a micro-interface generator is disposed between the adjacent fixed beds, and a hydrogen inlet is disposed on the micro-interface generator. A side wall of the hydrogenation reactor is provided with a product outlet, and the product outlet is connected to a hydro-refining reactor for performing a deep hydrogenation reaction. A reaction product from a bottom of the hydro-refining reactor is passed into a gas-liquid separation tank for separating a gas phase containing hydrogen sulfide and hydrogen, the desulfurized diesel is sent from a bottom of the gas-liquid separation tank to a stripping tower for purification of the desulfurized diesel. A top of the stripping tower is provided with a first separation tank for separating sulfur-containing oil and gas and low-separation oil, and a liquid phase located in the first separation tank is recycled back to the stripping tower for further purification treatment.

By disposing a micro-interface generator inside the hydrogenation reactor of the micro-interface reaction system for diesel hydrogenation of the present invention, the incoming hydrogen is dispersed and broken into micro-bubbles, thereby improving the mass transfer effect. The main function of the incoming straight-run diesel is to cooperate with the dispersion and crushing of the gas, which is equivalent to the role of the medium.

Furthermore, a stripping tower is disposed behind the gas-liquid separation tank, and hot steam is introduced into one side of the stripping tower, and light components and sulfur-containing oil and gas in the oil are separated out by stripping, and are finally separated out through the first separation tank at the top of the stripping tower to achieve further purification of the desulfurized diesel product. However, unseparated liquid phase in the first separation tank is returned back to the stripping tower for further stripping.

Furthermore, the micro-interface generator is disposed inside the hydrogenation reactor, preferably in a straight line along the vertical direction and evenly disposed between the adjacent fixed beds to ensure better catalytic hydrogenation effect of diesel in the gap between the two adjacent fixed beds during the hydro-desulfurization reaction, which is equivalent to simultaneous dispersing and crushing and catalytic reaction, making the connection between the dispersing and crushing operation and the reaction more closely. In addition, the catalyst added in the catalytic hydrogenation reaction is solid, such that it is filled into the reactor by means of filling. The main purpose of dispersing and crushing is to improve the effect of catalytic reaction and reduce energy consumption. Since the catalyst is disposed inside the reactor, the optimal way for the micro-interface generator is also to be disposed inside the reactor. It can be seen that it is most beneficial to dispose the micro-interface generator inside the hydrogenation reactor to improve the mass transfer effect. Therefore, the disposing position of the micro-interface generator is obtained through practical design, and needs to be specially designed according to different characteristics of different reactions.

Preferably, the plurality of sections of fixed beds comprises three sections, and a number of the micro-interface generator is 3; wherein two of the micro-interface generators are disposed between the two fixed beds, and another one of the micro-interface generators is disposed in the bottom of the hydrogenation reactor. The number of three micro-interface generators can ensure the effect of dispersion and crushing.

The above-mentioned micro-interface generator disposed inside the hydrogenation reactor is a pneumatic type. The mass transfer effect is improved by passing hydrogen into the micro-interface generator and then directly contacting with straight-run diesel, and then breaking into micro-bubbles.

Certainly, in addition to disposing the micro-interface generator inside the hydrogenation reactor, the micro-interface generator can also be disposed in the subsequent hydro-refining reactor to reduce energy consumption and improve the utilization rate of raw materials. Through simultaneously disposing the micro-interface generators in the hydrogenation reactor and the hydro-refining reactor, the reaction efficiency can be improved and the energy consumption of the reaction can be reduced.

Those skilled in the art can understand that the micro-interface generator used in the present invention has been embodied in the inventor's previous patents, such as patents with application numbers CN201610641119.6, 201610641251.7, CN201710766435.0, CN106187660, CN105903425A, CN109437390A, CN205833127U, and CN207581700U. In the previous patent CN201610641119.6, the specific product structure and working principle of the micro-bubble generator (that is, the micro-interface generator) were introduced in details. The application document states that "the micro-bubble generator includes a main body and a secondary crushing part, the main body has a cavity, the main body is provided with an inlet that communicates with the cavity, and opposite first and second ends of the cavity are open, wherein a cross-sectional area of the cavity decreases form the middle of the cavity to the first and second sends of the cavity. The secondary crushing part is arranged at least one of the first and second ends of the cavity, and a part of the secondary crushing part is arranged within the cavity, and an annular channel is formed between the secondary crushing part and through holes opened at both ends of the cavity. The micro-bubble generator further incudes a gas inlet pipe and a liquid inlet pipe." From the specific structure disclosed in this application document, it can be known that its specific working principle is: the liquid enters the micro-bubble generator tangentially through the liquid inlet pipe, rotates and cuts the gas at an ultra-high speed, and breaks the gas bubbles into micro-level micro-bubbles. Thus, the mass transfer area between the liquid phase and the gas phase is increased, and the micro-bubble generator in this patent belongs to a pneumatic micro-interface generator.

In addition, the previous patent 201610641251.7 states that a primary bubble breaker has a circulating liquid inlet, a circulating gas inlet and a gas-liquid mixture outlet, and the secondary bubble breaker communicates the feed port with the gas-liquid mixture outlet, indicating that the bubble breaker needs the gas and the liquid to be mixed and entered. Moreover, it can be seen from the following drawings that the primary bubble breaker mainly uses the circulating liquid as the power, in fact, the primary bubble breaker belongs to the hydraulic micro-interface generator, and the secondary bubble breaker is to pass the gas-liquid mixture into the ellipse at the same time. It rotates in the shape of the rotating ball, so that the bubbles are broken during rotations, so the secondary bubble breaker is actually a gas-liquid linkage micro-interface generator. In fact, both the hydraulic micro-interface generator and the gas-liquid linkage micro-interface generator belong to a specific form of micro-interface generators. However, the micro-interface generators used in the present invention are not limited to the above-mentioned types, the specific structure of the bubble breaker described in the previous patents is only one of the types of the micro-interface generator adopted in the present invention.

Moreover, the previous patent 201710766435.0 stated that "the principle of the bubble breaker is to achieve high-speed jets to achieve gas collision", and also stated that it can be used in micro-interface strengthening reactors to verify the relationship between the bubble breaker and the micro-interface generator. The previous patent CN106187660 also has related records on the specific structure of the bubble breaker. For details, see paragraphs [0031]-[0041] in the description and the accompanying drawings. It has a detailed description of the specific working principle of the bubble breaker S-2. The liquid phase inlet is disposed at the top of the bubble breaker, and a gas phase inlet is located at the side wall of the bubble breaker. The liquid phase entering from the top of the bubble breaker provides the entrainment power, so as to crush into ultra-fine bubbles. It can also be seen in the drawings that, the bubble breaker has a conical structure, and the diameter of the upper portion is larger than the diameter of the lower portion, so that the liquid phase can provide entrainment power more easily.

Since the micro-interface generator was just developed in the early stage of the previous patent application, it was named as micro-bubble generator ((CN201610641119.6), bubble breaker (201710766435.0), etc., and later its name is changed to micro-interface generator with continuous technological improvement. The micro-interface generator in the present invention is equivalent to the previous micro-bubble generator, bubble breaker, etc., although their names are different.

To sum up, the micro-interface generator of the present invention belongs to the prior art, although some bubble breakers belong to the pneumatic bubble breakers, some belong to the hydraulic bubble breakers, and some belong to the gas-liquid linkage bubble breakers, however, the difference between the types of bubble breakers is mainly selected based on specific working conditions. Furthermore, the connection between the micro-interface generator and the reactor and other devices, including the connection structure and the connection position, depends on the structure of the micro-interface generator. This is not limited.

Preferably, the type of the hydrogenation reactor for the hydrogenation reaction is a fixed bed reactor, the catalyst in the fixed bed reactor is fixed on the bed layer. The catalyst for the hydrogenation reaction generally adopts a nickel-based catalyst. Preferably, the catalyst can be a supported catalyst Nickel-based catalysts, or a nickel-based catalyst modified with alkaline earth metal oxide or rare earth metal oxide is more preferred.

Preferably, the type of the hydro-refining reactor is also a fixed-bed reactor, and the type of the catalyst selected can be consistent or inconsistent with the type of catalyst selected by the hydrogenation reactor.

Furthermore, the amounts of the catalysts in the hydrogenation reactor and the hydro-refining reactor can be determined according to properties of raw material oils, product quality requirements and properties of the catalyst. Generally, the amount of catalyst in the hydrogenation reactor is smaller than that in the hydro-refining reactor. The reason for the amount of catalysts used is that the previous hydrogenation reactor is a preliminary reaction, and the subsequent hydro-refining reactor is a deep reaction, and the addition of a micro-interface generator in the hydrogenation reactor can improve the reaction efficiency. Therefore, it is also possible to appropriately reduce the amount of catalyst, and it does not affect the normal progress of the hydrogenation reaction. The volume ratio of the catalyst dosage in the hydrogenation reactor and the hydro-refining reactor can be (1:12) to (1:15).

Preferably, a stripping product outlet is disposed at a bottom of the stripping tower, and the stripping product outlet is connected to a fractionation tower for purification and separation of desulfurized diesel. The function of stripping the desulfurized diesel from the gas-liquid separation tank in the stripping tower is mainly to separate the sulfur-containing oil and gas and the low-separation oil phase in the oil product, and the desulfurized diesel after stripping is transferred to the fractionation tower for further purification and separation.

Preferably, a top of the fractionation tower is provided with a second separation tank for separating out naphtha and part of sulfur-containing oil and gas, and the liquid phase in the second separation tank is recycled back to the fractionation tower for further purification. The light components (including naphtha and part of sulfur-containing oil and gas) in the second separation tank at the top of the fractionation tower come out and go to other treatment processes for further treatment.

Preferably, the product outlet is disposed at a bottom of the fractionation tower, and the product outlet is transported to a finished product tank by a delivery pump. The product outlet at the bottom of the fractionation tower is relatively pure desulfurized diesel, which can be directly stored in the finished product tank.

Preferably, a cooling device is disposed between the delivery pump and the finished product tank. The function of the cooling device is to cool the oil after stripping and fractionation treatment for subsequent storage.

Furthermore, a heater is disposed between the stripping tower and the fractionation tower, so that the fractionated oil can be preheated and the energy consumption in the fractionation tower can be reduced.

Preferably, a top of the gas-liquid separation tank is provided with a gas phase outlet, and the gas phase outlet is connected to a desulfurization tower for realizing absorption of hydrogen sulfide in the gas phase. A top of the desulfurization tower is provided with a desulfurization agent spray port, and the desulfurization tower is provided with a multi-layer packing for increasing a mass transfer effect.

The reaction product after the hydrogenation reaction is passed into the gas-liquid separation tank, hydrogen sulfide and hydrogen flow out from the top of the gas-liquid separation tank, and enter the desulfurization tower for hydrogen sulfide removal. The liquid phase goes out from the bottom of the gas-liquid separation tank to the stripping tower.

Preferably, a desulfurizing agent circulating tank is disposed beside the desulfurization tower, the desulfurizing agent circulating tank is connected with a lower part of the side wall of the desulfurizing tower through a pipeline, and the top of the desulfurizing agent circulating tank is connected with the desulfurization agent spray port through a pipeline.

The desulfurizing agent is generally lye, which is circulated into the desulfurization tower and is reverse contact with the gas phase entering from the bottom of the desulfurization tower, sprayed and absorbed to achieve desulfurization. The lye after desulfurization is returned to the desulfurizing agent circulating tank. When the lye in the desulfurizing agent circulating tank is seriously polluted during the cycle of use, it will be stopped for replacement.

Preferably, each of the hydrogen inlets is collected and connected to a hydrogen main pipeline, the hydrogen main pipeline is connected to a hydrogen storage tank, and the hydrogen recovered from the top of the desulfurization tower is merged with the hydrogen main pipeline through a pipeline.

Preferably, a heater is disposed between the hydrogenation reactor and the hydro-refining reactor for heating the product from the product outlet. Because the hydrogenation reaction generally has a relatively high temperature, disposing a heater between the two reactors can improve reaction efficiency and correspondingly reduce energy consumption of the reactors themselves.

Preferably, the reaction product from the bottom of the hydro-refining reactor is cooled by a heat exchanger before entering the gas-liquid separation tank.

Preferably, the bottom of the hydrogenation reactor is provided with a straight-run diesel inlet, and the straight-run diesel inlet is connected to the heat exchanger through a pipeline for heating the straight-run diesel before entering the hydrogenation reactor. A heat exchanger is provided to achieve heat exchange between the reaction product after hydrogenation and the incoming straight-run diesel.

In the micro-interface reaction system of the present invention, a pump body can be disposed on the pipeline connected between corresponding devices according to actual needs.

The present invention also provides a reaction method for diesel hydrogenation, including the following steps:
after a mixed micro-interface of straight-run diesel and hydrogen is dispersed and broken, a hydrogenation reaction is performed, and after hydro-refining reaction, a gas-liquid separation, a stripping operation, and a fractional distillation are performed in sequence.

Preferably, a pressure of the hydrogenation reaction is 2-8MPa, and a temperature of the hydrogenation reaction is 250-320°C. Most preferably, the pressure of the hydrogenation reaction is 3.5MPa, and the temperature of the hydrogenation reaction is 300°C.

Preferably, a pressure of the hydro-refining reaction is 2-8Mpa, and a temperature of the hydro-refining reaction is 250-320°C. Most preferably, the pressure of the hydro-refining reaction is 3.5Mpa, and the temperature of the hydro-refining reaction is 300°C.

In the above reaction method, since raw materials are not dispersed and crushed in advance like the hydrogenation reaction before the hydro-refining reaction, the reaction pressure and the reaction temperature will be slightly higher than those of the hydrogenation reaction in actual operation.

The desulfurized diesel product obtained by the diesel hydrogenation reaction of the present invention has good quality and high yield, and the desulfurization rate can reach 99.95%.

The reaction method for diesel hydrogenation of the present invention has low reaction temperature, greatly reduced pressure and high liquid hourly space velocity, which is equivalent to increasing the production capacity, and the final desulfurization rate is close to 100%, which is nearly 1 percentage higher than that in the past.

Compared with the prior art, the invention has the following beneficial effects:
(1) by combining the hydrogenation reactor and the micro-interface generator, the micro-interface reaction system for diesel hydrogenation of the present invention reduces the energy consumption, reduces the reaction temperature, improves the reaction yield, and improves the utilization rate of raw materials;
(2) the micro-interface reaction system for diesel hydrogenation of the present invention is most advantageous for improving the mass transfer effect by disposing the micro-interface generator at a specific location;
(3) the micro-interface reaction system for diesel hydrogenation of the present invention realizes heat exchange between the reaction product after hydrogenation and the incoming straight-run diesel by disposing a heat exchanger;
(4) the reaction method for diesel hydrogenation of the present invention has low reaction temperature, greatly reduced pressure and high liquid hourly space velocity, which is equivalent to increasing the production capacity, and the final desulfurization rate is close to 100%, which is nearly 1 percentage higher than before.

### BRIEF DESCRIPTION OF THE DRAWINGS

Upon reading the following detailed description of preferred embodiments, various advantages and benefits will be apparent to those of ordinary skill in the art. The drawings are for the purpose of explaining preferred embodiments only, and do not constitute improper limitations on the present invention. The same components are also denoted by the same reference numerals throughout the drawings. In the drawings:

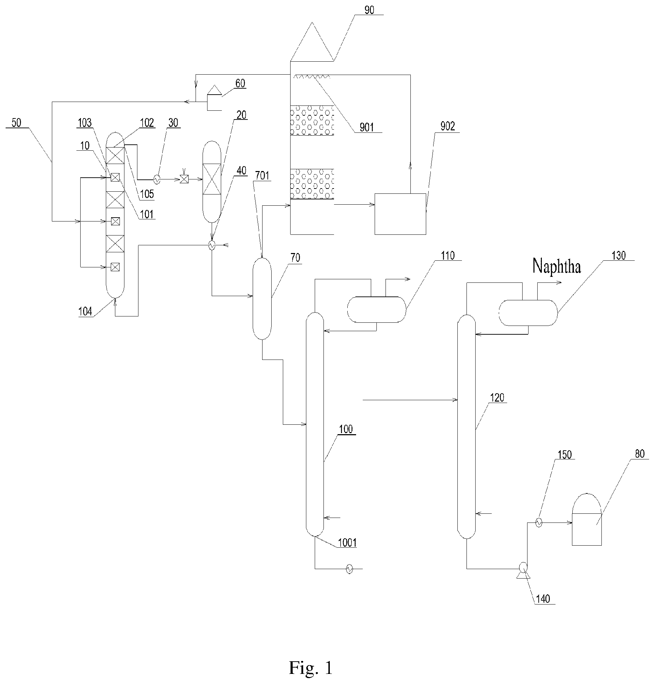

Fig. 1 is a structural diagram of a micro-interface reaction system for diesel hydrogenation provided in an embodiment of the present invention.

List of serial numbers in the figures:
10- hydrogenation reactor ; 101-micro-interface generator ;
102-fixed bed ; 103- hydrogen inlet ;
104- straight-run diesel inlet ; 105- product outlet ;
20- hydro-refining reactor ; 30- heater ;
40- heat exchanger ; 50- hydrogen main pipeline ;
60- hydrogen storage tank ; 70- gas-liquid separation tank ;
701- gas phase outlet ; 80- finished product tank ;
90- desulfurization tower ; 901- desulfurization agent spray port ;
902- desulfurizing agent circulating tank ; 100- stripping tower ;
1001- stripping product outlet ; 110- first separation tank ;
120- fractionation tower ; 130- second separation tank ;
140- delivery pump ; 150- cooling device -

### DESCRIPTION OF THE PREFERRED EMBODIMENTS

The technical schemes of the present invention will be clearly and completely described below with reference to the accompanying drawings and specific embodiments, but those skilled in the art will understand that the embodiments described below are part of the embodiments of the present invention, rather than all of the embodiments. It is only used to illustrate the present invention and should not be construed as limiting the scope of the present invention. Based on the embodiments of the present invention, all other embodiments obtained by those of ordinary skill in the art without creative efforts shall fall within the protection scope of the present invention. If the specific conditions are not indicated in the examples, it is carried out according to the conventional conditions or the conditions suggested by the manufacturer. The reagents or instruments used without the manufacturer's indication are conventional products that can be purchased from the market.

In the description of the present invention, it should be noted that the terms such as "center", "upper", "lower", "left", "right", "vertical", "horizontal", "inner", "outer", etc., the indicated orientation or positional relationship is based on the orientation or positional relationship shown in the accompanying drawings, which is only for the convenience of describing the present invention and simplifying the description, rather than indicating or implying that the indicated device or element must have a specific orientation or a specific orientation, construction and operation, and therefore should not be construed as limiting the invention. Furthermore, the terms such as "first", "second", and "third" are used for descriptive purposes only and should not be construed to indicate or imply relative importance.

In the description of the present invention, it should be noted that the terms such as "installed", "connected" and "coupled" should be understood in a broad sense, unless otherwise expressly specified and limited, for example, it can be a fixed connection, a detachable connection or an integral connection; or it can be a mechanical connection or an electrical connection; or it can be directly connected or indirectly connected through an intermediate medium, or it can be internal communication between two elements. For those of ordinary skill in the art, the specific meanings of the above terms in the present invention can be understood in specific situations.

In order to illustrate the technical schemes of the present invention more clearly, the following descriptions are given in the form of specific embodiments.

### Embodiments

Referring to Fig. 1. Fig. 1 is a micro-interface reaction system for diesel hydrogenation according to an embodiment of the present invention, which includes a hydrogenation reactor 10. A product outlet 105 is disposed on a side wall of the hydrogenation reactor, and the product outlet 105 is connected to a hydro-refining reactor 20 for deep hydrogenation. A heater 30 is disposed between the hydrogenation reactor 10 and the hydro-refining reactor 20 for heating the product form the product outlet 105. The reaction product from the bottom of the hydro-refining reactor 20 is cooled by a heat exchanger 40 before entering a gas-liquid separation tank 70. The bottom of the hydrogenation reactor 10 is provided with a straight-run diesel inlet 104, and the straight-run diesel inlet 104 is connected to the heat exchanger 40 through a pipeline for heating the straight-run diesel before entering the hydrogenation reactor 10. The purpose of the heat exchanger 40 is to exchange heat between the raw diesel and the obtained finished diesel, so as to ensure that raw diesel enters the hydrogenation reactor 10 for hydrogenation reaction

A plurality of sections of fixed beds 102 are sequentially disposed from top to bottom in the hydrogenation reactor 10, and the plurality of sections of fixed beds 102 are filled with catalysts. A micro-interface generator 101 is disposed between two adjacent fixed beds 102. The plurality of sections of fixed beds 102 preferably includes three sections, and a number of the micro-interface generator 101 is preferably 3, wherein two of the micro-interface generators 101 are disposed between the two fixed beds, and another one of the micro-interface generators 101 is disposed in the bottom of the hydrogenation reactor 10. In order to satisfy the effect of dispersion and crushing, three micro-interface generators 101 are basically required, and a hydrogen inlet 103 is disposed on the micro-interface generator 101. After the hydrogen inlets 103 are collected, they are connected to the hydrogen main pipeline 50. The hydrogen main pipeline 50 is connected to a hydrogen storage tank 60. Raw hydrogen enters the micro-interface generators 101 after being branched into each branched pipeline through the hydrogen main pipeline 50 after entering from the hydrogen storage tank 60.

The product coming out from the hydro-refining reactor 20 first passes through a gas-liquid separation tank 70 for separating the gas phase containing hydrogen sulfide and hydrogen from the product, and then the separated product goes from the bottom of the gas-liquid separation tank 70 to a stripping tower 100 for purification of the desulfurized diesel. The top of the stripping tower 100 is provided with a first separation tank 110 for separating sulfur-containing oil and gas and low-separation oil, and the liquid phase located in the first separation tank 110 is circulated back to the stripping tower 100 for further purification treatments. The low-cut oil phase and gas phase in the oil are separated out after stripping.

A stripping product outlet 1001 is disposed at the bottom of the stripping tower 100, and the stripping product outlet 1001 is connected to a fractionation tower 120 for purification and separation of desulfurized diesel. A second separation tank 130 is disposed at the top of the fractionation tower 120 for separating out naphtha and part of the sulfur-containing oil and gas. The liquid phase located in the second separation tank 130 is circulated back to the fractionation tower 120 for further purification treatments. A product outlet is disposed at the bottom of the fractionation tower 120, and the product outlet is transported to a finished product tank 80 by a delivery pump 140, wherein the finished product is desulfurized diesel. After a series of stripping and fractionation treatments, the desulfurized diesel has more pure components. Certainly, in order to improve the quality of the desulfurized diesel itself, further purification operations can also be performed subsequently.

In order to reduce energy consumption of the fraction tower 120, a cooling device 150 for cooling the oil is disposed between the finished product tank 80 and the delivery pump 140.

The top of the gas-liquid separation tank 70 is provided with a gas phase outlet 701. The gas phase containing hydrogen and hydrogen sulfide coming out of the gas phase outlet 701 goes to the desulfurization tower 90 to realize absorption of hydrogen sulfide in the gas phase. The top of the desulfurization tower 90 is provided with a desulfurization agent spray port 901, and the desulfurization tower 90 is provided with a multi-layer packing for increasing a mass transfer effect. The packing is generally two layers, which are evenly distributed inside the desulfurization tower 90.

A desulfurizing agent circulating tank 902 is disposed beside the desulfurization tower 90. The desulfurizing agent circulating tank 902 is connected with a lower part of the side wall of the desulfurizing tower 90 through a pipeline. The top of the desulfurizing agent circulating tank 902 is connected to the desulfurizing agent spray port 901 through a pipeline. The desulfurizing agent is generally lye. The lye is circulated into the desulfurization tower 90 and is in reverse contact with the gas phase entering from the bottom of the desulfurization tower 90, and is sprayed and absorbed to achieve desulfurization. The lye after desulfurization is returned to the desulfurizing agent circulating tank 902. When the lye in the desulfurizing agent circulating tank 902 is seriously polluted, it will be stopped for replacement.

In the above-mentioned embodiment, it is not limited to include three micro-interface generators 101. In order to increase the effect of dispersion and mass transfer, additional micro-interface generators 101 can also be added. The installation position is not limited. It can be installed externally or built-in. When it is built-in, it can also be installed on the side wall of the kettle to be oppositely disposed, so as to realize hedging of the micro-bubbles coming out of the outlet of the micro-interface generator 101. Certainly, the best scheme of the present invention is to use the built-in micro-interface generator 101.

In the above-mentioned embodiment, the type of the hydrogenation reactor 10 can be not only a fixed bed reactor, but also other types such as a fluidized bed reactor. In addition the method of feeding and discharging is no limited. It can be fed from the bottom and discharged from the top, or it can be fed from the top and discharged from the bottom. However, it is more preferable to feed from the side wall and discharge from the top. In the above embodiment, there is no specific requirement for the number of the pump bodies, which can be disposed at corresponding positions as required.

The working process and principle of the micro-interface reaction system for diesel hydrogenation of the present invention are briefly described below.

Nitrogen purges each equipment in the micro-interface reaction system, and then starts to operate. Hydrogen and straight-run diesel are firstly hydrogenated in the hydrogenation reactor 10. Before the hydrogenation reaction is performed, the hydrogen is passed into the micro-interface generator 101 located inside the hydrogenation reactor 10, and the gas is formed into micro-bubbles after being dispersed and broken, which is more conducive to efficient reaction. After the hydrogenation reaction is performed, the reaction product is transferred to the hydro-refining reactor 20 through a pipeline for a deep hydrogenation reaction.

Preferably, a pressure of the hydrogenation reaction is 2-8MPa, and a temperature of the hydrogenation reaction is 250-320°C. Most preferably, the pressure of the hydrogenation reaction is 3.5MPa, and the temperature of the hydrogenation reaction is 300°C.

Preferably, a pressure of the hydro-refining reaction is 2-8Mpa, and a temperature of the hydro-refining reaction is 250-320°C. Most preferably, the pressure of the hydro-refining reaction is 3.5Mpa, and the temperature of the hydro-refining reaction is 300°C.

The catalysts used in both the hydrogenation reaction and the hydro-refining reaction are Mo-Ni catalysts, and the volume ratio of the catalysts in the hydrogenation reactor 10 and the hydro-refining reactor 20 can be (1:12) to (1:15), preferably (1:13).

The reaction product after the hydrogenation reactor 10 is separated by the gas-liquid separation tank 70, the gas phase at the top goes to the desulfurization tank for desulfurization treatment, and the product separated at the bottom goes to the stripping tower 100 for stripping, then goes to the fractionation tower 120 for separation and treatment, and is finally stored in the finished product tank 80 as pure desulfurized diesel. The above process steps are cycled back and forth to make the entire synthesis system run smoothly.

By adopting the hydrogenation reaction process of the present invention, the removal rate of desulfurization can reach 99.95%, which is increased by nearly 1 percentage compared with previous hydrogenation reaction process. Furthermore, by disposing the micro-interface generator 101, the pressure and temperature of the hydrogenation reactor are reduced, and energy consumption is sufficiently reduced.

To sum up, compared with the micro-interface reaction system for diesel hydrogenation in the prior art, the micro-interface reaction system for diesel hydrogenation of the present invention has fewer equipment components, small footprint, low energy consumption, low cost, high safety, and high reaction efficiency, controllable reaction, and high conversion rate of raw materials. It is equivalent to providing a micro-interface reaction system with stronger operability for the field of diesel hydrogenation, which is worthy of widespread applications.

Finally, it should be noted that: the above descriptions are only preferred embodiments of the present invention, and are not intended to limit the present invention. For those skilled in the art, the present invention may have various modifications and changes. Any modification, equivalent replacement, improvement, etc. made within the spirit and principle of the present invention shall be included within the protection scope of the present invention.

## Claims

1. A micro-interface reaction system for diesel hydrogenation, comprising:
a hydrogenation reactor, is successively provided with a plurality of sections of fixed beds from top to bottom, and the plurality of sections of fixed beds are filled with catalysts; a micro-interface generator is disposed between the adjacent fixed beds, and a hydrogen inlet is disposed on the micro-interface generator;
a side wall of the hydrogenation reactor is provided with a product outlet, and the product outlet is connected to a hydro-refining reactor for performing a deep hydrogenation reaction;
a reaction product from a bottom of the hydro-refining reactor is passed into a gas-liquid separation tank for separating a gas phase containing hydrogen sulfide and hydrogen, the desulfurized diesel is sent from a bottom of the gas-liquid separation tank to a stripping tower for purification of the desulfurized diesel, a top of the stripping tower is provided with a first separation tank for separating sulfur-containing oil and gas and low-separation oil, and a liquid phase located in the first separation tank is recycled back to the stripping tower for further purification treatment.

2. The micro-interface reaction system for diesel hydrogenation according to claim 1, wherein a stripping product outlet is disposed at a bottom of the stripping tower, and the stripping product outlet is connected to a fractionation tower for purification and separation of desulfurized diesel.

3. The micro-interface reaction system for diesel hydrogenation according to claim 2, wherein a top of the fractionation tower is provided with a second separation tank for separating out naphtha and part of sulfur-containing oil and gas, and the liquid phase in the second separation tank is recycled back to the fractionation tower for further purification.

4. The micro-interface reaction system for diesel hydrogenation according to claim 3, wherein the product outlet is disposed at a bottom of the fractionation tower, and the product outlet is transported to a finished product tank by a delivery pump.

5. The micro-interface reaction system for diesel hydrogenation according to claim 4, wherein a cooling device is disposed between the delivery pump and the finished product tank.

6. The micro-interface reaction system for diesel hydrogenation according to claim 1, wherein a top of the gas-liquid separation tank is provided with a gas phase outlet, and the gas phase outlet is connected to a desulfurization tower for realizing absorption of hydrogen sulfide in the gas phase;
a top of the desulfurization tower is provided with a desulfurization agent spray port, and the desulfurization tower is provided with a multi-layer packing for increasing a mass transfer effect.

7. The micro-interface reaction system for diesel hydrogenation according to claim 6, wherein a desulfurizing agent circulating tank is disposed beside the desulfurization tower, the desulfurizing agent circulating tank is connected with a lower part of the side wall of the desulfurizing tower through a pipeline, and the top of the desulfurizing agent circulating tank is connected with the desulfurization agent spray port through a pipeline.

8. The micro-interface reaction system for diesel hydrogenation according to claim 1, wherein the plurality of sections of fixed beds comprises three sections, and a number of the micro-interface generator is 3; wherein two of the micro-interface generators are disposed between the two fixed beds, and another one of the micro-interface generators is disposed in the bottom of the hydrogenation reactor.

9. A reaction method using the micro-interface reaction system for diesel hydrogenation according to any one of claims 1-8, comprising:
after a mixed micro-interface of straight-run diesel and hydrogen is dispersed and broken, a hydrogenation reaction is performed, and after hydro-refining reaction, a gas-liquid separation, a stripping operation, and a fractional distillation are performed in sequence.

10. The reaction method according to claim 9, wherein a pressure of the hydrogenation reaction is 2-8MPa, and a temperature of the hydrogenation reaction is 250-320°C; and a pressure of the hydro-refining reaction is 2-8Mpa, and a temperature of the hydro-refining reaction is 250-320°C.
